# DEMANDE DE BREVET EUROPEEN

(11) **EP 2 043 007 A1**
(43) Date de publication de la demande: **01.04.2009**
(21) Numéro de dépôt: 07117408.0
(22) Date de dépôt: 27.09.2007
(51) Int. Cl.: G06F 17/30

(54) **Procédé de recherche d'informations sur un réseau intranet, extranet, internet ou toute autre source de diffusion d'informations numériques et moteur de recherche pour la mise en oeuvre dudit procédé**

(71) Demandeur: Poitevineau, Gerald, 21250 Glanon (FR); Sauzay, Sébastien, 77710 Villebeon (FR)
(72) Inventeur: Poitevineau, Gerald, 21250 Glanon (FR); Sauzay, Sébastien, 77710 Villebeon (FR)
(74) Mandataire: Tetaz, Franck Claude Edouard

(57) **Abrégé**

Procédé de recherche d'informations sur un réseau intranet, extranet, internet ou toute autre source de diffusion d'informations numériques et moteur de recherche pour la mise en oeuvre dudit procédé.

La présente invention concerne un procédé de recherche d'informations dans au moins une source de diffusion d'informations numériques, remarquable en ce qu'il consiste au moins dans les étapes suivantes de :
- sélection d'au moins une source d'informations,
- transmission d'instructions de collecte des informations à au moins un module satellite autonome depuis un module central et/ ou depuis au moins un autre module satellite,
- collecte des informations à partir du ou des modules satellites,
- transmission de tout ou partie des informations collectées par le ou les modules satellites au module central et/ou à au moins un module satellite, et
- traitement des informations collectées.

Un autre objet de l'invention concerne un moteur de recherche mettant en oeuvre le procédé suivant l'invention.

## Description

La présente invention concerne le domaine des moteurs de recherche d'informations dans au moins une source de diffusion d'informations numériques, tel que sur un réseau informatique intranet, extranet ou internet, lesdites informations consistant en des informations contenues dans des pages « web » d'un ou plusieurs sites internet par exemple.

Dans le domaine de l'informatique, on connaît bien des réseaux d'ordinateurs sous la forme de réseaux intranet, extranet et internet. Ces réseaux permettent aux ordinateurs de communiquer entre eux des informations au moyen de protocoles de communication tels que TCP/IP ou bien encore HTTP selon les acronymes anglo-saxon « Transmission Control Protocol/Internet Protocol » et respectivement « Hypertext Transfer Protocol »

Internet est incontestablement le plus grand réseau d'ordinateurs qui permet un accès à un très grand nombre d'informations. Ces informations se présentent soit sous la forme de bases de données soit sous la forme de documents connus sous la forme de pages « web » ou d'une pluralité de pages regroupées sous la forme d'un « site internet ». Lesdites pages « web » et lesdits sites internet se trouvent sur des serveurs distants sur lesquels un ordinateur personnel dit PC peut se connecter au moyen d'un protocole de communication au travers d'une ligne téléphonique, d'un réseau cablé ou similaire.

La consultation des pages « web » s'effectue au moyen d'un programme d'ordinateur dit navigateur ou « browser » qui possède une interface utilisateur graphique. Ces pages « web » comportent généralement des liens dits hyperliens qui permettent de créer des liens vers d'autres pages « web » que les utilisateurs peuvent consulter par les utilisateurs par des commandes simples, par exemple par pointage et par un clic de souris sur le lien dans le navigateur. Par ailleurs, ces pages « web » peuvent être construites avec des syntaxes très diverses telles que le langage à balises à hypertexte HTML selon l'acronyme anglo-saxon « Hypertext Markup Language » ou le langage à balises extensible XML selon l'acronyme anglo-saxon « eXtensible Markup Language », et peuvent comprendre des informations sous la forme d'un texte, d'une image, d'une vidéo ou de sons.

Afin de trouver des informations parmi le grand nombre d'informations disponibles sur Internet, on a mis au point des outils de recherche dits moteurs de recherche qui sont des algorithmes étudiant électroniquement le contenu des pages « web » et créant un index et une base de données en fonction de cette étude. Ces moteurs de recherche se présentent communément sous la forme d'une page « web » dans laquelle un ou plusieurs champs de recherche peuvent être remplis par l'utilisateur. La recherche peut être de type booléenne ou par langage naturelle.

On entend par algorithme une séquence d'opérations, sous la forme d'un programme d'ordinateur, pour l'exécution d'une tâche.

De manière habituelle, les bases de données sont crées par recherche dans Internet et par une copie locale de chaque page ou l'aspect d'une page dans une mémoire ou par la collecte des soumissions des fournisseurs de pages « web ». Certains aspects seulement des pages « web » peuvent être copiés tels que l'adresse URL selon l'acronyme anglo-saxon « Uniform Resource Locator », le titre ou le texte. Chaque page résultante est généralement indexée pour permettre une consultation ultérieure. De cette manière, lorsqu'une requête est formulée sur un moteur de recherche, ce dernier recherche dans son propre index et sa base de données et non pas dans l'ensemble des pages « web » d'internet en temps réel. Les résultats de la recherche sont généralement présentés sous la forme de copies des pages « web » ou d'une page « web » comportant des hyperliens vers les pages trouvées lors de la recherche.

La plupart des moteurs de recherche connus utilisent une technologie de recherche automatique pour indexer les résultats des recherches qui mettent en oeuvre des descriptions invisibles des sites appelées « méta-étiquettes » dont les auteurs sont les éditeurs du site internet.

Compte tenu du fait que les éditeurs des sites internet sont peuvent choisir librement l'énoncé de ces méta-étiquettes, de nombreuses pages internet comportent des méta-étiquettes identiques. Ainsi, il est difficile pour les moteurs de recherche de fournir des résultats pertinents.

Afin de remédier à cet inconvénient, les moteurs de recherche comportent des algorithmes pour classer par catégorie les pages « web ».

Toutefois, certains éditeurs de sites internet incorporent dans les méta-étiquettes de leurs sites internet des termes de recherche populaires qui n'ont aucun lien avec le contenu des pages « web » de leur site de sorte que les moteurs de recherche fournissent des résultats comportant de nombreuses pages « web » indésirables dites « pages spam ». On notera que ces pages sont appelées « spam » lorsqu'elles comprennent un moyen quelconque apte à prendre en faute les moteurs de recherche ou les algorithmes d'indexation.

Par ailleurs, on connaît également des moteurs de recherche qui transmettent, à partir d'un même serveur, une même requête à plusieurs sites internet prédéterminés en utilisant un logiciel tel que le logiciel Cold Fusion (marque déposée) de la société américaine ALLAIRE par exemple. Les informations correspondant à la requête sont transmises au serveur puis traitées pour supprimer les faux amis et/ou les doublons.

On entend par serveur un matériel informatique ayant un système d'exploitation et des programmes d'ordinateur destinés à faire fonctionner des services d'application, des applications (logiciels) et des bases de données. Les serveurs font parties d'un ensemble « intranet » et/ou « extranet ». Ils sont hébergés, gérés et paramétrés par un maître d'oeuvre communément appelé « administrateur ».

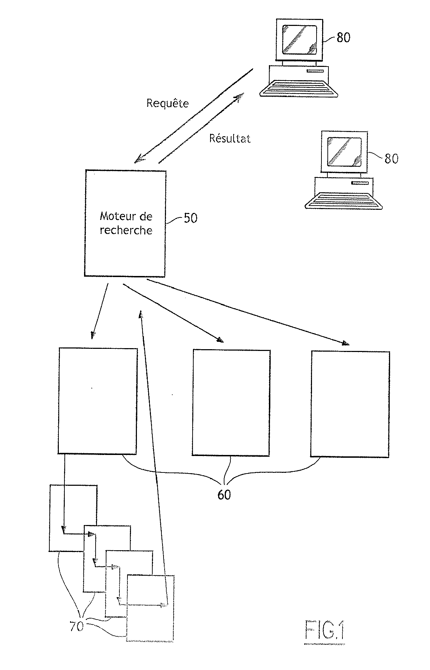

En référence à la figure 1, on expliquera le fonctionnement de ces moteurs de recherche. Ces derniers consistent en un programme d'ordinateur enregistré sur au moins un serveur 50. Le moteur de recherche interroge au moyens de robot communément appelés « crawler » des sites internet hébergés sur des serveurs distants 60 et consultent régulièrement les pages internet 70 contenues sur ces serveurs 60. On entend par robot ou « crawler » une composante d'un moteur de recherche qui balaye le Web ou d'autres ressources Internet, afin d'alimenter en données les index du moteur de recherche, qui est ainsi en mesure de répondre aux questions posées par les internautes. Ces robots ou « crawler » sont conçus pour fonctionner sur des serveurs et parcourent le web ou un réseau intranet via des liens hypertextes. Les moteurs de recherche indexent alors toutes les pages internet 70 et enregistrent ces indexations sur son serveur 50. Lorsqu'un utilisateur 80 se connecte au serveur 50 pour transmettre une requête de via le moteur de recherche, ce dernier cherche les indexations des pages web qui correspondent aux critères de la recherche de l'utilisateur 80. Le moteur de recherche génère alors une page web dans laquelle les liens vers les adresses URL des pages web correspondant aux indexations qui répondent aux critères de recherche de l'utilisateur 80.

Toutefois, certains sites internet sont construits avec des syntaxes particulières de sorte que les informations ne peuvent pas être collectées par cette méthode.

Par ailleurs, cette architecture de moteurs de recherche présente des limites dues à la fréquence d'interrogation des serveurs hébergeant les pages web, dite fréquence de crawling, à la capacité de traitement du ou des serveurs du moteur de recherche et à la bande passante des connexions internet.

De plus, un robot ou « crawler » ne peut indexer la totalité d'un site internet qui ne présente pas la totalité de son contenu sous forme de liens hypertextes.

Afin de multiplier les capacités de traitement des moteurs de recherche, on a déjà imaginé des moteurs de recherche dans lequel une requête de recherche est transmise à plusieurs serveurs qui effectuent la recherche à partir de la requête. Lesdits serveurs transmettent ensuite leurs résultats à au moins un courtier qui consolide les résultats avant de les transmettre à l'utilisateur.

Ce type de moteur effectue également un crawling des pages web et une indexation des pages crawlés de sorte qu'il présente les mêmes inconvénients que les moteurs de recherche décrit précédemment.

On connaît également des « méta-moteurs » qui transmettent une requête à plusieurs moteurs de recherche indépendants, chaque moteur de recherche indépendant effectuant la même recherche à partir de la même requête éventuellement traduite dans le langage approprié sur la ou les mêmes sources d'information. C'est le cas notamment du « métamoteur » décrit dans la publication MENG W et A1 « Building Efficient and Effective Metasearch Engines ».

Ces « méta-moteurs » présentent les mêmes limites et inconvénients que les moteurs de recherche décrit précédemment.

Enfin, on connaît également des moteurs de recherche qui divisent la requête de l'utilisateur en plusieurs requêtes élémentaires, chaque requête élémentaire étant également en fragments de requête qui sont traités par des noeuds index pour effectuer la recherche à partir de chaque fragment de requête. Les résultats des recherches sont réunis par des noeuds locaux, l'ensemble des résultats étant formaté par des noeuds d'entrée qui présentent les résultats à l'utilisateur. C'est le cas notamment de la demande de brevet américain US 6,505,191.

Ce type de moteur de recherche présente également les mêmes inconvénients que les autres moteurs de recherche de l'art antérieur.

L'un des buts de l'invention est donc de remédier à ces inconvénients en proposant un procédé de recherche d'informations sur un réseau intranet, extranet, internet ou analogue et un moteur de recherche pour la mise en oeuvre dudit procédé permettant de procurer des résultats pertinents et avantageusement classés en fonction de leur pertinence notamment.

Conformément à l'invention, il est proposé un procédé de recherche d'informations dans au moins une source de diffusion d'informations numériques, remarquable en ce qu'il consiste au moins dans les étapes suivantes de :
- sélection d'au moins une source d'informations,
- transmission d'instructions de collecte des informations à au moins un module satellite autonome depuis un module central, et/ou depuis au moins un autre module satallite,
- collecte des informations à partir du ou des modules satellites,
- transmission de tout ou partie des informations collectées par le ou les modules satellites au module central et/ou à au moins un module satellite, et
- traitement des informations collectées.

On observera que le ou les satellites autonomes ont un processus indépendant des systèmes d'exploitation et des programmes. Ces satellites autonomes ne font pas partie d'un ensemble « intranet » et/ou « extranet » et ne nécessitent aucun serveur pour fonctionner. Ainsi, un satellite autonome peut fonctionner aussi bien sur un ordinateur personnel, un téléphone portable ou tout autre équipement électronique.

Selon une caractéristique essentielle du procédé suivant l'invention, le module central et/ou au moins un autre module satellite transmet à chaque module des instructions distinctes de collecte des informations et les instructions de collecte transmises à un module satellite concernent tout ou partie d'une unique source d'information.

Par ailleurs, les informations collectées par les modules satellites sont traitées par au moins un module de traitement autonome apte à recevoir les informations collectées transmises par le module central.

De manière alternative, tout ou partie des informations collectées par les modules satellites sont traitées par au moins un module satellite.

De plus, tout ou partie des informations collectées par les modules satellites et transmises au module central sont enregistrées dans au moins une base de données dite locale.

Lesdites informations enregistrées dans la base de données locale sont enregistrées dans un fichier comportant au moins un marqueur.

Ce marqueur est une donnée informatique générée par un algorithme en fonction de l'adresse de la source d'informations et/ou des informations collectées et/ou du contexte, c'est-à-dire de l'utilisation finale prévue des informations après traitement, et/ou de la question posée.

Selon une autre caractéristique essentielle du procédé suivant l'invention, le traitement des informations collectées consiste en un traitement dit contextuel dépendant de la destination des informations par au moins un module de traitement autonome piloté par le module central et comporte au moins les étapes suivantes de :
- détection d'une ou plusieurs informations dites cibles dans les informations collectées par les modules satellites,
- corrélation entre lesdites informations cibles,
- classement desdites informations cibles,
- enregistrement desdites informations traitées sous la forme d'un fichier informatique dans une base de données locale.

L'étape de corrélation consiste au moins dans les étapes suivantes de :
- attribution d'au moins un coefficient dit de proximité à chaque information cible en fonction du contexte,
- attribution d'un coefficient dit de valorisation à chaque information cible en fonction de la fiabilité de la source d'informations et/ou du contexte et/ou de la pertinence de l'information cible au regard du contexte et/ou de l'occurrence de l'information lors de l'étape de collecte ou de traitement des informations.

Un autre objet de l'invention concerne un moteur de recherche d'informations dans au moins une source de diffusion d'informations numériques, pour la mise en oeuvre du procédé suivant l'invention ; ledit moteur de recherche est remarquable en ce qu'il comporte au moins un algorithme constituant un module dit satellite, autonome, pour collecter des informations sur une source d'informations à partir d'instructions de collecte transmise par un module central, et/ou par au moins un module satellite, au moins un algorithme constituant un module de traitement des informations collectées, au moins une base de données locale dans laquelle les informations collectées et/ou traitées sont enregistrées.

De manière avantageuse, chaque module satellite comporte un navigateur internet intégré afin de communiquer avec des serveurs distants et/ou le module central et/ou au moins un autre module satellite.

Ainsi, en terme d'infrastructure, le satellite autonome n'a besoin que d'une connexion internet au moyen d'un fournisseur d'accès internet (FAI) et fait partie intégrante d'internet. De plus, les satellites autonomes communiquent entre eux et avec le module central en mode « pair à pair » (peer-to-peer). Les modules satellites autonomes sont ainsi à la fois clients et serveurs et ils échangent des données chiffrées ou non directement par le réseau internet.

Chaque module de traitement comporte au moins un algorithme de détection d'une ou plusieurs informations dites cibles dans les informations collectées par les modules satellites, au moins un algorithme de corrélation entre lesdites informations cibles, et un algorithme de classement desdites informations cibles.

Par ailleurs, il comporte des moyens de présentation des informations collectées et/ou traitées à la suite d'une requête d'un utilisateur

D'autres avantages et caractéristiques ressortiront mieux de la description qui va suivre du procédé de recherche d'informations dans une source de diffusion d'informations numériques conforme à l'invention, à partir des dessins annexés sur lesquels :
- la figure 1 est une représentation schématique du fonctionnement des moteurs de recherche de l'art antérieur,
- la figure 2 est un bloc diagramme des différentes étapes du procédé conforme à l'invention,
- la figure 3 est un bloc diagramme des différentes étapes de traitement des informations collectées du procédé suivant l'invention,

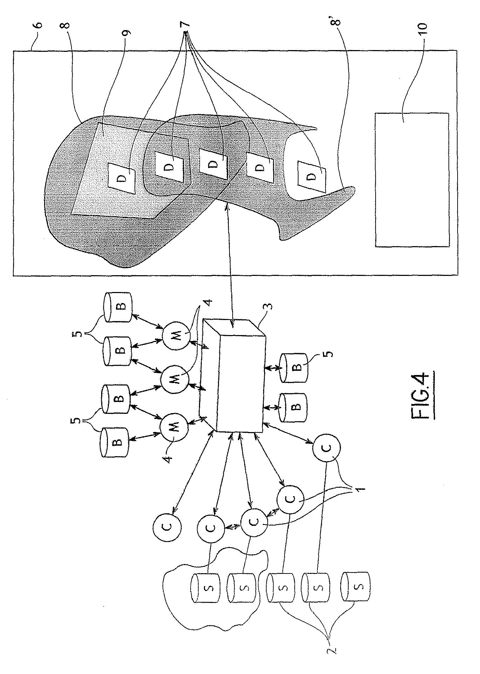

- la figure 4 est une représentation schématique des différents modules du moteur de recherche mettant en oeuvre le procédé suivant l'invention.

En référence à la figure 1, le procédé de recherche d'informations suivant l'invention comporte une première étape 100 de sélection d'au moins une source d'informations. Ces sources d'information consistent en des sources d'information numériques sous forme de bases de données 110 cryptées ou non dans un format quelconque, tel que Oracle, MySQL, SQL Server, des pages internet dans un langage quelconque, tel qu'en langage html, java, XML, etc... On notera qu'il peut également s'agir de pages internet de résultats généré par un moteur de recherche telle qu'une page OBD par exemple.

Le procédé comporte ensuite une étape 200 de transmission d'instructions de collecte des informations numériques dans la ou les sources d'informations préalablement sélectionnées. Ces instructions de collecte sont transmises à au moins un module satellite autonome depuis un module central, lesdits modules satellites se connectant à la source d'informations qui lui est allouée puis générant des requêtes d'interrogation sur ladite source d'informations. Ces instructions de collecte dépendent notamment de la requête de recherche d'un utilisateur qui a remplit en langage naturel, ou qui a sélectionné des questions dans un menu déroulant, dans le champ d'un formulaire d'une interface graphique d'un site internet par exemple.

Dans une étape 300, les informations correspondant aux requêtes sont collectées à partir du ou des modules satellites puis lesdites informations collectées sont transmises, dans une étape 400, par le ou les modules satellites au module central.

Les informations collectées sont soit traitées, dans une étape 500, par au moins un module de traitement le module central soit enregistrées dans une première base de données pour une utilisation ultérieure. Tout ou partie des informations collectées par les modules satellites et transmises au module central sont alors enregistrées dans au moins une base de données dite locale.

Les informations collectées sont enregistrées dans la base de données locale dans un fichier informatique comportant au moins un marqueur. Ledit marqueur est une donnée informatique générée par un algorithme en fonction de l'adresse de la source d'informations numériques et/ou des informations collectées et/ou du contexte, c'est-à-dire de l'utilisation finale prévue des informations traitées, et/ou de la question posée par l'utilisateur. On entend par « algorithme » une partie d'un programme d'ordinateur comportant un enchaînement d'actions nécessaires à l'accomplissement d'une tâche.

Les informations traitées sont ensuite soit enregistrées dans une seconde base de donnée soit affichées sur un écran de visualisation, étape 600, tel qu'un écran d'ordinateur PC, un écran de téléphone mobile ou similaire.

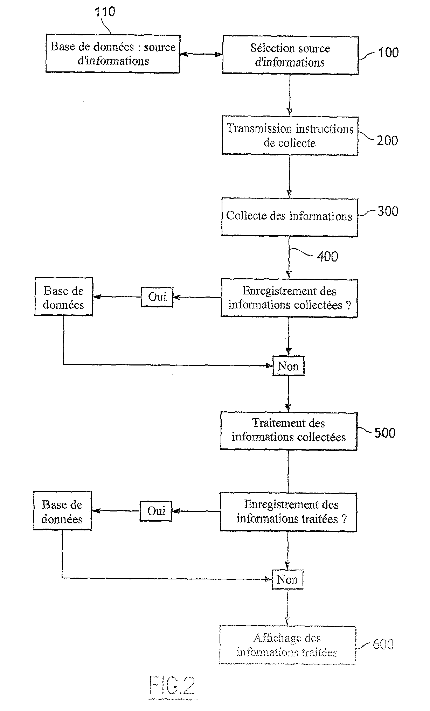

L'étape 500 de traitement des informations collectées, en référence à la figure 2, consiste en un traitement dit contextuel dépendant de la destination des informations par au moins un module satellite et/ou au moins un module de traitement autonome piloté par le module central et comporte une première étape 700 de détection d'une ou plusieurs informations dites cibles dans les informations collectées par le ou les modules satellites enregistrées ou non dans une base de données locale. L'étape de traitement des données comporte ensuite une étape 800 de corrélation entre lesdites informations cibles qui se décompose en une étape 810 d'attribution d'au moins un coefficient dit de proximité à chaque information cible en fonction du contexte et en une étape 820 d'attribution d'un coefficient dit de valorisation à chaque information cible en fonction de la fiabilité de la source d'informations et/ou du contexte et/ou de la pertinence de l'information cible au regard du contexte et/ou de l'occurrence de l'information lors de l'étape de collecte ou de traitement des informations.

Lesdits coefficients de proximité et de valorisation sont enregistrées dans le fichier contenant chaque information cible, ce dernier étant enregistré soit dans une mémoire soit dans une base de donnée locale.

Par ailleurs, on comprend bien que, entre deux requêtes de recherche d'informations, les coefficients de proximité et de valorisation d'une même information cible peuvent être modifiés en fonction notamment du contexte.

L'étape de traitement 500 comporte ensuite une dernière étape 900 de classement des informations cibles à partir du coefficient de valorisation et/ou du coefficient de proximité attaché à chaque information cible.

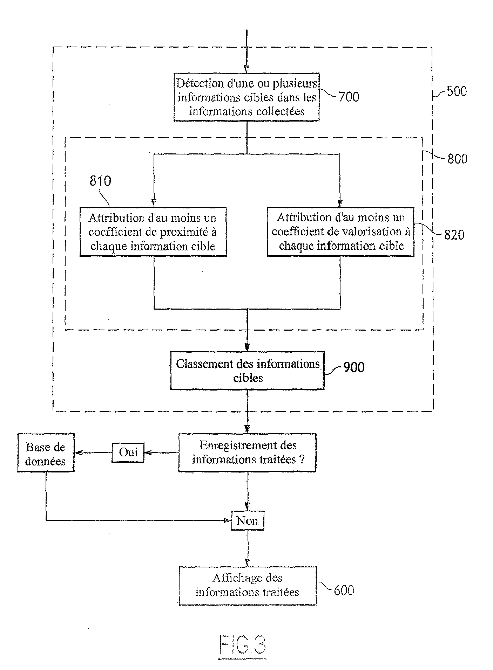

En référence à la figure 3, le moteur de recherche mettant en oeuvre le procédé suivant l'invention consiste en un programme d'ordinateur comportant plusieurs modules indépendants. Ce programme d'ordinateur pourra être rédigé dans n'importe quel langage informatique bien connu de l'Homme du Métier et être utilisé sur n'importe quel système d'exploitation d'un ordinateur portable, d'un téléphone mobile, d'un PDA ou similaire.

Le moteur de recherche comporte au moins un premier algorithme constituant un module dit satellite 1, autonome, pour collecter des informations sur une source d'informations numériques 2 à partir d'instructions de collecte transmise par tout moyen de transmission approprié, tel que le réseau Internet, un réseau Extranet, Ethernet ou similaire , audit module satellite 1 par un second algorithme constituant un module central 3.

De préférence, chaque module satellite 1 comporte un navigateur interne intégré afin de communiquer avec des serveurs distants des sources d'informations numériques et/ou le module central 3 et/ou avec un ou plusieurs autres modules satellite 1.

Lesdites informations numériques consistent en des données de texte, d'image, de vidéo, de son, etc... disponible sur un serveur sous la forme d'une base de données ou de pages internet.

Par ailleurs, on entend par « machine » tout dispositif apte à exécuter un programme d'ordinateur tel qu'un ordinateur PC, un serveur, un PDA, un téléphone portable, un automate programmable, etc...

L'algorithme constituant le module central 3 est localisé sur une première machine, tel qu'un serveur, et le ou les algorithmes constituant le ou les modules satellites 1 sont localisés respectivement sur des machines distinctes de la machine du module central 3, chaque module satellite 1 ayant une identité propre et étant localisé sur une unique machine, et de préférence sur une machine d'un utilisateur. On entend par utilisateur, une personne qui interroge le moteur de recherche suivant l'invention depuis sa machine. En particulier, le module satellite 1 pourra être installé sur la machine d'un utilisateur qui souhaite avoir une alerte par courrier électronique sur une ou plusieurs requêtes. Ainsi, le module satellite 1 enregistré sur la machine de l'utilisateur, ainsi que les modules satellites 1 enregistrés sur d'autres machines, interrogeront régulièrement les sources d'information à partir des requêtes des utilisateurs.

Le module central 3 définit des instructions de collecte et/ou de traitement propres pour chaque module satellite 1, définit la distribution desdites instructions de collecte et/ ou de traitement, puis transmet ces instructions à chacun desdits module satellites 1. Ces derniers communiquent continûment avec le module central 3 pour lui indiquer d'une part leurs identités respectives et d'autre part leurs disponibilités, c'est-à-dire leurs possibilités d'exécuter de nouvelles instructions de collecte.

De plus, le module central 3 comprend un algorithme de gestion des disponibilités des modules satellites 1 afin de définir de manière optimale la meilleure distribution des instructions de collecte et/ou de traitement aux modules satellites 1 en fonction de leurs disponibilités. Lorsque les modules satellites 1 transmettent au module central 3 les informations collectées en exécution des instructions de collecte préalablement transmises par le module central 3, ledit module central 3 enregistre la fin de l'exécution des instructions de collecte par le module satellite 1 identifié et attribue au module satellite 1 identifié le statut de disponible.

Une telle architecture du module central 3 et des modules satellites 1 permet notamment de réduire la durée de la recherche.

Le moteur de recherche comporte, par ailleurs, au moins un algorithme constituant un module de traitement 4 des informations collectées, autonome et apte à communiquer avec ledit module central 3, et au moins une base de données locale 5 dans laquelle les informations collectées et/ou traitées sont enregistrées. Les informations collectées par les modules satellites 1 et les informations traitées antérieurement par les modules de traitement 4 peuvent être enregistrées par le module central 3 dans les bases de données locales 5 pour former des bases de connaissances Chaque module de traitement 4 comporte au moins un algorithme de détection d'une ou plusieurs informations dites cibles dans les informations collectées par les modules satellites 1 et/ou traitées antérieurement par les modules de traitement 4 et enregistrées dans les bases de données locales 5 en fonction des instructions envoyées par le module central, au moins un algorithme de corrélation entre lesdites informations cible et un algorithme de classement desdites informations cibles en regroupant avantageusement les informations traitées sous la forme d'ensemble et éventuellement de sous-ensemble.

L'algorithme de corrélation comporte un algorithme secondaire d'attribution d'au moins un coefficient dit de proximité à chaque information cible en fonction du contexte et un deuxième algorithme secondaire d'attribution d'un coefficient dit de valorisation à chaque information cible en fonction de la fiabilité de la source d'informations et/ou du contexte et/ou de la pertinence de l'information cible au regard du contexte et/ou de l'occurrence de l'information lors de l'étape de collecte ou de traitement des informations.

De plus, le module central comporte des moyens de génération d'une interface graphique 6 interactive, telle qu'une page html par exemple, apte à être consultée par un utilisateur sur un ordinateur PC, un téléphone mobile, etc..., comportant d'une part les informations traitées 7 classées en ensembles 8,8' et sous-ensemble 9 d'informations et d'autre part un formulaire de requête 10 permettant à l'utilisateur de saisir les critères de sa recherche. Le formulaire de requête peut, par exemple, consister dans des champs de formulaire d'interrogation en langage naturel et/ou dans des champs à menu déroulant. Cette interface graphique permet également à l'utilisateur de se connecter depuis un navigateur internet, communément appelé Browser, avec le module central 3, en mode ASP par exemple, pour paramétrer le moteur de recherche et plus particulièrement la sélection des sources d'informations numériques.

Le moteur de recherche suivant l'invention pourra avantageusement être utilisé pour effectuer une veille ou une analyse économique dans le domaine de l'immobilier, de l'automobile, et plus particulièrement dans les domaines des annonces immobilières et automobiles.

Par exemple, pour un moteur de recherche d'annonces immobilières, un premier utilisateur se connecte sur le site internet du moteur de recherche suivant l'invention. Si l'utilisateur souhaite être alerté par mail ou par tout autre moyen de communication tel que par SMS selon l'acronyme anglo-saxon « Short Message System », il télécharge un module satellite 1 sur son ordinateur. Lors de l'installation du module satellite 1, des informations contextuelles relatives à son identité, à sa localisation, etc.... seront transmises au module central 3. Par ailleurs, la ou les requêtes de l'utilisateur seront enregistrées dans ce module satellite 1 de sorte que ce dernier effectuera régulièrement une recherche sur les sources d'information sélectionnées. En fonction de ces capacités de collecte et de traitement, ce module satellite 1 pourra également transmettre et recevoir des informations de résultat et/ou des requêtes de recherche provenant du module central et/ou d'autres modules satellites 1 installés sur les ordinateurs d'autres utilisateurs du moteur de recherche d'annonces immobilières. Ainsi le module satellite 1 d'un utilisateur qui recherche un appartement dans une ville déterminée pourra également effectuer des recherches pour une maison dans une autre ville pour le compte d'un module satellite d'un autre utilisateur. Les résultats seront alors transmis au module satellite 1 du second utilisateur et in fine audit utilisateur.

On notera que contrairement aux robots ou « crawler » des moteurs de recherche de l'art antérieur, le ou les modules satellites permettent de collecter l'intégralité des données d'un site internet ou d'une base de données. En effet, le module central 3 transmet aux satellites autonomes les requêtes nécessaires à l'indexation de contenus indisponibles sous forme de liens hypertextes.

De plus, chaque module satellite 1 du moteur de recherche « upload », c'est-à-dire transmet, régulièrement l'état de sa capacité de collecte et de traitement des informations connectées au module central et « download », c'est-à-dire télécharge, à partir du module central 3 de nouvelles requêtes de recherche et/ou des informations à traitées en fonction de ses capacités libres.

Toutefois, il est bien évident que le procédé et le moteur de recherche mettant en oeuvre le procédé suivant l'invention pourra être adapté à d'autres domaines d'application sans pour autant sortir du cadre de l'invention.

## Revendications

1. - Procédé de recherche d'informations dans au moins une source de diffusion d'informations numériques, **caractérisé en ce qu'**il consiste au moins dans les étapes suivantes de :
- sélection d'au moins une source d'informations,
- transmission d'instructions de collecte des informations à au moins un module satellite autonome depuis un module central et/ ou depuis au moins un autre module satellite,
- collecte des informations à partir du ou des modules satellites,
- transmission de tout ou partie des informations collectées par le ou les modules satellites au module central et/ou à au moins un module satellite, et
- traitement des informations collectées.

2. - Procédé suivant la revendication précédente **caractérisé en ce que** le module central et/ou au moins un autre module satellite transmet à chaque module des instructions distinctes de collecte des informations.

3. - Procédé suivant l'une quelconque des revendications 1 ou 2 **caractérisé en ce que** les instructions de collecte transmises à un module satellite concernent tout ou partie d'une unique source d'information.

4. - Procédé suivant l'une quelconque des revendications 1 à 3 **caractérisé en ce que** les informations collectées par les modules satellites sont traitées par au moins un module de traitement autonome apte à recevoir les informations collectées transmises par le module central.

5. - Procédé suivant l'une quelconque des revendications 1 à 4 **caractérisé en ce que** tout ou partie des informations collectées par les modules satellites sont traitées par au moins un module satellite.

6. - Procédé suivant l'une quelconque des revendications 1 à 5 **caractérisé en ce que** tout ou partie des informations collectées par les modules satellites et transmises au module central sont enregistrées dans au moins une base de données dite locale.

7. - Procédé suivant la revendication 6 **caractérisé en ce que** les informations enregistrées dans la base de données locale sont enregistrées dans un fichier comportant au moins un marqueur.

8. - Procédé suivant la revendication 7 **caractérisé en ce que** ledit marqueur est une donnée informatique générée par un algorithme en fonction de l'adresse de la source d'informations et/ou des informations collectées et/ou du contexte, c'est-à-dire de l'utilisation finale prévue des informations après traitement, et/ou de la question posée.

9. - Procédé suivant l'une quelconque des revendications 1 à 8 **caractérisé en ce que** le traitement des informations collectées consiste en un traitement dit contextuel dépendant de la destination des informations par au moins un module de traitement autonome piloté par le module central et comporte au moins les étapes suivantes de :
- détection d'une ou plusieurs informations dites cibles dans les informations collectées par les modules satellites,
- corrélation entre lesdites informations cibles,
- classement desdites informations cibles,
- enregistrement desdites informations traitées sous la forme d'un fichier informatique dans une base de données locale.

10. - Procédé suivant la revendication 9 **caractérisé en ce que** l'étape de corrélation consiste au moins dans les étapes suivantes de :
- attribution d'au moins un coefficient dit de proximité à chaque information cible en fonction du contexte,
- attribution d'un coefficient dit de valorisation à chaque information cible en fonction de la fiabilité de la source d'informations et/ou du contexte et/ou de la pertinence de l'information cible au regard du contexte et/ou de l'occurrence de l'information lors de l'étape de collecte ou de traitement des informations.

11. - Moteur de recherche d'informations dans au moins une source de diffusion d'informations numériques, pour la mise en oeuvre du procédé suivant l'une quelconque des revendications 1 à 7, **caractérisé en ce qu'**il comporte au moins un algorithme constituant un module dit satellite (1), autonome, pour collecter des informations sur une source d'informations (2) à partir d'instructions de collecte transmise par un module central (3), et/ou par au moins un autre module satellite (1), au moins un algorithme constituant un module de traitement (5) des informations collectées, au moins une base de données locale (5) dans laquelle les informations collectées et/ou traitées sont enregistrées.

12. - Moteur de recherche suivant la revendication 11 **caractérisé en ce que** chaque module satellite (1) comporte un navigateur internet intégré afin de communiquer avec des serveurs distants et/ou le module central (3) et/ou au moins un autre module satellite (1).

13. - Moteur de recherche suivant l'une quelconque des revendications 11 ou 12 **caractérisé en ce que** chaque module de traitement (4) comporte au moins un algorithme de détection d'une ou plusieurs informations dites cibles dans les informations collectées par les modules satellites (1), au moins un algorithme de corrélation entre lesdites informations cibles, et un algorithme de classement desdites informations cibles.

14. - Moteur de recherche suivant l'une quelconque des revendications 11 à 13 **caractérisé en ce qu'**il comporte des moyens de présentation (6) des informations collectées et/ou traitées à la suite d'une requête d'un utilisateur.
